# EUROPÄISCHE PATENTSCHRIFT

(11) **EP 2 162 517 B1**
(45) Veröffentlichungstag und Bekanntmachung des Hinweises auf die Patenterteilung: **02.01.2013**
(21) Anmeldenummer: 08758182.3
(22) Anmeldetag: 07.06.2008
(51) Int. Cl.: C10L 5/04, C10L 11/04

(54) **BRENNSTOFF ZUM BEHEIZEN EINER EINRICHTUNG ZUM GRILLEN**
FUEL FOR HEATING AN APPLIANCE FOR GRILLING
COMBUSTIBLE POUR FAIRE CHAUFFER UN GRIL

(30) Priorität: 29.06.2007 DE 202007009186 U
(43) Veröffentlichungstag der Anmeldung: 17.03.2010
(73) Patentinhaber: Schiller, Alfons, 83071 Stephanskirchen (DE)
(72) Erfinder: Schiller, Alfons, 83071 Stephanskirchen (DE)
(74) Vertreter: Fleuchaus, Michael A.
(86) Internationale Anmeldenummer: PCT/DE2008/000969
(87) Internationale Veröffentlichungsnummer: WO 2009/003439

(56) Entgegenhaltungen:
- EP-A- 0 128 788
- FR-A- 1 494 234
- GB-A- 2 235 208
- US-A1- 2002 124 461
- US-A1- 2002 129 543
- US-A1- 2005 005 508

## Beschreibung

Die vorliegende Erfindung betrifft einen Brennstoff zum Beheizen einer Einrichtung zum Grillen, mit den im Oberbegriff des Patentanspruches 1 angegebenen Merkmalen.

Aus dem Stand der Technik ist es bekannt, beispielsweise zwei bis drei würfelförmige Grillanzündhilfen auf eine kleine Lage Holzkohle zu legen und diese Grillanzündhilfen dann anzuzünden.

Diese bekannten Grillanzündhilfen lässt man dann etwa ein bis zwei Minuten brennen. Anschließend gibt man weiteren Brennstoff in Form von Holzkohle hinzu, wartet etwa 40 Minuten bis zur Bildung einer Ascheschicht und legt dann das Grillgut auf den Rost auf.

Im Stand der Technik sind unter anderem die EP128788 A1, die US 200210124461 A1, die US 200210129543 A1, die US 2005/0005508 A1, FR 1494234, die GB 2235 208 A und die US 5573555 bekannt, die unter anderem das Entzünden von Brennstoffen betreffen.

Diese aus dem Stand der Technik bekannten Grillanzündhilfen sind in vielerlei Hinsicht nachteilig:

Zum einen kommt es bei dem Hinzufügen von Holzkohle nach dem Anzünden der dortigen Grillanzündhilfen häufig zu einem Ersticken der Flammen.

Unter Verlängerung der insgesamt benötigten Grill-Anheizdauer müssen dann nochmals Grillanzündhilfen ausgelegt, entzündet und nach einer Wartezeit mit einer Holzkohle-Schicht bedeckt werden.

Durch diese drastische Verlängerung der insgesamt benötigten Grill-Anheizdauer kommt es oftmals zu einer Erschöpfung der Geduld des gegebenenfalls hungrigen Grillbetreibers.

Von besonders unerfahrenen und unbedachten Grillbetreibern werden dann gelegentlich leicht entflammbare Flüssigkeiten auf das mit einem erstickten, festen Grillanzünder vorbehandelte Holzkohlebett geschüttet.

Bei dem ersten Anzündversuch können sich jedoch unter Umständen erste Ansätze einer nicht erloschenen Glut an der die ursprünglich eingesetzten Grillanzündhilfen unmittelbar umgebenden Holzkohle gebildet haben. Diese ersten Ansätze einer nicht erloschenen Glut können dann zu einer gefürchteten, spontanen, stichflammenartigen Entzündung der aufgeschütteten, leicht entflammbaren Flüssigkeit und gegebenenfalls sogar zu einem Zurückschlagen der Flamme in die Flasche der leicht entzündbaren Flüssigkeit führen.

In der Regel wirkt sich beides auf die körperliche Unversehrtheit des Grillbetreibers äußerst nachteilig aus.

Bei den Grillanzündhilfen des Standes der Technik ist eine lange Anheizdauer auch deswegen erforderlich, weil die sich lokal, eng begrenzt um die zwei bis drei würfelförmigen Grillanzündhilfen gebildeten primären Holzkohle-Glutnester - zur Bildung einer größeren Glutfläche - in einem separaten Verfahrensschrift mühsam und zeitaufwändig ausgebreitet werden müssen.

Auch bei diesem Ausbreitvorgang der anfänglichen zwei bis drei Holzkohle-Glutnester kommt es gelegentlich zu einem Verlöschen der Glut, wodurch ein erneuter, zeitintensiver Grillanzündvorgang erforderlich wird.

Auch dieses durch den Ausbreitvorgang der anfänglichen Glutnester bedingte Verlöschen der Glut kann aufgrund der damit verbundenen Notwendigkeit eines erneuten, zeitintensiven Grillanzündvorganges also ebenfalls mit dem Erschöpfen der Geduld des Grillbetreibers einhergehen und das vorbeschriebene, für die körperliche Unversehrtheit des Grillbetreibers äußerst nachteilige Aufgießen einer leicht entflammbaren Flüssigkeit aus einer Flasche zur Folge haben.

Selbst wenn die anfänglich gebildeten zwei bis drei Glutnester anschließend ordnungsgemäß ausgebreitet wurden, steht dem Betreiber des Grills zunächst nicht die gesamte Fläche des Grilles zu Grillzwecken zur Verfügung da sich die Glut in den meisten Fällen nicht gleichmäßig über die gesamte Rostfläche homogen verteilt. Insbesondere Rand- und Eckenbereiche sind anfangs glutfrei und für Grillzwecke daher nicht nutzbar.

Nachteilig sind die aus dem Stand der Technik bekannten würfelförmigen Grillanzündhilfen auch hinsichtlich ihres umständlichen Handlings, welches sich aus den zahlreichen, vorbeschriebenen Verfahrensschritten eines damit durchgeführten Grill-Anzündvorganges und der verstrichenen, langen Zeitspanne bis zum Erhalt eines verhältnismäßig gleichmäßigen Glutbettes ergibt.

Aus dem Stand der Technik sind neben den vorbeschriebenen festen Grillanzündhilfen auch flüssige und gelartige Grillanzündhilfen bekannt, welche insbesondere aus den nachfolgenden Gründen nachteilig sind:

Zum einen können sie selbst bei einem ordnungsgemäßen Aufbringen auf eine glutfreie Holzkohleschicht bei einem anschließenden Anzündversuch mittels Feuerzeug oder Streichholz - gegebenenfalls unter nachteiliger Beeinflussung der körperlichen Unversehrtheit des Grill-Betreibers - stichflammenartig auflodern.

Dem Nachteil eines stichflammenartigen Aufloderns kommt offensichtlich dann besondere Bedeutung zu, wenn die flüssige oder gelartige Grillanzündhilfe im Anschluß an einen gescheiterten, ersten Holzkohle-Anzündversuch mit verbliebenen Glut-Resten für einen zweiten, nachfolgenden Holzkohle-Anzündversuch zum Einsatz kommt.

Die bekannten flüssigen oder gelartigen Grillanzündhilfen sind darüber hinaus deswegen nachteilig, weil sie bei ihrem Aufgießen oder Aufstreichen auf eine Holzkohleschicht in der Regel nur mit den obersten Holzkohlestücken in Kontakt kommen, während die tieferliegenden mittleren, weiter unten in der Holzkohleschicht befindlichen Holzkohlestücke nicht in Kontakt mit diesen bekannten flüssigen oder gelartigen Grillanzündhilfen kommen.

Werden flüssige Grillanzündhilfen - zur Erreichung von tieferliegenden Holzkohleschichten - in großer Menge eingesetzt, sammeln diese sich oftmals unter Bildung von Grillanzündhilfen-Pfützen auf dem Boden des Grilles, wenn dieser flüssigkeitsdicht ist.

Wird dann die flüssige Grillanzündhilfe zum Beispiel mittels eines Streichholzes entzündet, beobachtet man häufig eine Stichflammenbildung oder zumindest ein ausgeprägtes Verdampfen der am Grillboden angesammelten Grillanzündhilfen-Pfütze. Beides kann sich äußerst nachteilig auf die körperliche Unversehrtheit des Grill-Betreibers und/oder auf den Geschmack des später auf den Rost aufgelegten Grillgutes auswirken.

In den meisten Fällen ist der Boden eines Grilles jedoch nicht flüssigkeitsdicht, so dass sich eine gegebenenfalls eingesetzte große Menge an flüssiger Grillanzündhilfe nicht pfützenartig auf dem Boden des Grilles ansammelt, sondern durch die undichten Stellen des Grillbodens nach unten auf den Untergrund - zumindest unter Fleckenbildung auf dem Untergrund - abtropft.

Die verstrichene, benötigte Anzünd-Zeitspanne bis zur gleichmäßigen Durchsetzung einer dickeren, für Grillzwecke geeigneten Holzkohleschicht mit Glut, ist also im Falle des Einsatzes der bekannten flüssigen oder gelartigen Grillanzündhilfen besonders lange, wodurch die Geduld des Grill-Betreibers in ausgeprägtem Maße strapaziert wird.

Die Aufgabe der vorliegenden Erfindung besteht daher in der Bereitstellung eines Brennstoffes zum Beheizen einer Einrichtung zum Grillen, welche das Problem des Erstickens der Entzündungsflammen selbst zu Beginn der Anzündphase nicht kennt, dessen Anzünd-Dauer sehr kurz ist, dessen Handling äußerst bequem ist, da der Brennstoff das Aufbringen einer zusätzlichen Holzkohleschicht und eine Verteilung von einigen wenigen Glutnestern nicht erfordert, dessen Betriebssicherheit besonders ausgeprägt ist, welcher nach der Initialanzündung innerhalb besonders kurzer Zeit ein gleichmäßiges Glutbett ohne Vornahme von weiteren Verfahrensschritten bildet, welcher die Gefahr eines stichflammenartigen Aufloderns nicht kennt, welcher die gleichmäßige Durchsetzung selbst dicker Holzkohleschichten innerhalb besonders kurzer Zeit mit Glut ermöglicht und welcher die Gefahr einer Fleckenbildung auf dem Untergrund nicht kennt.

Erfindungsgemäß wird diese Aufgabe bei einem gattungsgemäßen Brennstoff durch die im kennzeichnenden Teil des Patentanspruchs 1 angegebenen Merkmale gelöst.

Besonders bevorzugte Ausführungsformen sind Gegenstand der Unteransprüche.

Der erfindungsgemäße Brennstoff zum Beheizen einer Einrichtung zum Grillen umfasst in der Regel einen ersten Bestandteil, welcher Holzkohle enthält.

Vorzugsweise umfasst der erfindungsgemäße Brennstoff zum Beheizen einer Einrichtung zum Grillen ferner einen oder mehrere weitere Holzkohle-Entzündungs-Bestandteile.

Im Allgemeinen umfassen der oder die Holzkohle-Entzündungs-Bestandteile einen oder mehrere brennbare Stoffe.

In der Regel brennen der oder die weiteren Holzkohle-Entzündungs-Bestandteile nach ihrer Entflammung weiter, auch wenn die Zündquelle entfernt wird. Vorzugsweise entzündet der weitere Holzkohle-Entzündungs-Bestandteil durch dieses Weiterbrennen den ersten Bestandteil aus Holzkohle auf besonders sichere Art und Weise.

Im Falle des erfindungsgemäßen Brennstoffes kann der erste Bestandteil aus Holzkohle beispielsweise in Form von Grill-Holzkohle, Grillholzkohlebriketts, losen Stücken oder Pellets ausgebildet sein.

Bei dem erfindungsgemäßen Brennstoff können der oder die weiteren Holzkohle-Entzündungs-Bestandteile, welche einen oder mehrere brennbare Stoffe enthalten, grundsätzlich fest oder flüssig sein. In besonders bevorzugten Ausführungsformen des erfindungsgemäßen Brennstoffes sind der oder die Holzkohle-Entzündungs-Bestandteile jedoch fest.

Im Allgemeinen sind die Holzkohle-Entzündungs-Bestandteile mit Luftsauerstoff unter Abgabe von Wärme verbrennbar, wobei die dabei abgegebene Wärme den Holzkohle-Bestandteil zumindest auf dessen Zündtemperatur aufheizt und dadurch oder dabei anzündet.

Im Falle des erfindungsgemäßen Brennstoffes können der oder die weiteren Holzkohle-Entzündungs-Bestandteile, welche einen oder mehrere brennbare Stoffe enthalten, einen Flammpunkt oberhalb von 55° C, vorzugsweise oberhalb von 60 °C, insbesondere oberhalb von 65 °C, aufweisen. Noch höher liegende Flammpunkte des oder der Holzkohle-Entzündungs-Bestandteile sind jedoch ohne weiteres möglich.

In der Regel können der oder die weiteren Holzkohle-Entzündungs-Bestandteile einen oder mehrere Stoffe enthalten, welche beispielsweise ausgewählt sind aus der Gruppe, die Holz, Sägemehl, Sägespäne, Holzpellets, Holzkügelchen, Paraffine, dickflüssiges Paraffin, dünnflüssiges Paraffin, feste oder flüssige Gemische gereinigter, gesättigter aliphatischer Kohlenwasserstoffe, verzweigte Isoparaffine, unverzweigte n-Paraffine, Alkane, Paraffinkohlenwasserstoffe, Isoalkane, n-Alkane, Cycloalkane, Alkanole, Ethanol, Alkansulfonate, Alkylsulfonate, Hexamethylentetramin, Wasser, Glycerin, Rapsöl, Rüböl, Rübsenöl, Mineralöl, vollsynthetische Öle, Silikonöle, pflanzliche Öle, tierische Öle, Triglyceride mittlerer oder ungesättigter Fettsäuren, Leime, Klebstoffe, welche wasserlösliche, tierische, pflanzliche oder synthetische Polymere und Wasser als Lösungsmittel umfassen, Carbonsäuren, anorganische Sauerstoffsäuren, Säureanhydride, Zellulose, Polysaccharide, Erdöl, Petroleum, Rohöl, Erdöl-Destillate, Naphthensäuren, Phenole, Harze, Naphthene, Aromaten, oder Mischungen hiervon, umfasst.

In besonders bevorzugten Ausführungsformen des erfindungsgemäßen Brennstoffes kann der Holzkohle-Entzündungs-Bestandteil, welcher einen oder mehrere brennbare Stoffe enthält, mit dem Holzkohlebestandteil beispielsweise mittels Beflockung und/oder Aufspritzen und/oder Eintauchen und/oder Verpressen und/oder Verkleben und/oder Tränken und/oder Besprühen in Kontakt gebracht sein.

Im Falle des erfindungsgemäßen Brennstoffes kann insbesondere ein fester Holzkohle-Entzündungs-Bestandteil, welcher einen oder mehrere brennbare Stoffe enthält, den Holzkohlebestandteil in Form beispielsweise einer teilweisen oder vollständigen Ummantelung, Umhüllung, Schale oder eines Balles umgeben.

In besonders bevorzugten Ausführungsformen des erfindungsgemäßen Brennstoffes kann die Wandstärke des in Form einer teilweisen oder vollständigen Ummantelung, Umhüllung, Schale oder Kugel ausgebildeten Holzkohle-Entzündungs-Bestandteiles, im Bereich von 0,5 mm bis 5,0 cm, vorzugsweise im Bereich von 1,0 mm bis 4,0 cm, insbesondere im Bereich von 2,0 mm bis 3,0 cm, liegen.

Bei den im vorstehenden Absatz aufgeführten Stoffen kann es sich auch um die "brennbaren Stoffe" im Sinne der vorliegenden Schutzrechtsanmeldung handeln, sofern diese über das Merkmal der Brennbarkeit verfügen.

Bei dem erfindungsgemäßen Brennstoff kann der Gewichtsanteil des Holzkohle-Entzündungs-Bestandteiles an dem Gesamtgewicht des Brennstoffes beispielsweise im Bereich von 0,2 Gew.% bis 90 Gew.%, vorzugsweise im Bereich von 0,5 Gew.% bis 80 Gew.%, insbesondere im Bereich von 1,0 Gew.% bis 70 Gew.%, liegen.

Vorzugsweise sind im Falle des erfindungsgemäßen Brennstoffes die Schichtdicke oder der Gehalt des Holzkohle-Entzündungs-Bestandteiles derart gewählt, dass nach einer Brenndauer des Holzkohle-Entzündungs-Bestandteiles von längsten 10 Minuten, vorzugsweise von längstens 9 Minuten, insbesondere von längstens 8 Minuten, der Holzkohle-Entzündungs-Bestandteil vollständig abgebrannt ist.

Zusammenfassend ist festzustellen, dass im Rahmen der vorliegenden Erfindung ein Brennstoff zum Beheizen einer Einrichtung zum Grillen bereitgestellt wird, welcher das Problem des Erstickens der Anzündflammen selbst zu Beginn der Anzündphase nicht kennt.

Aufgrund der Verbindung des Holzkohle-Entzündungs-Bestandteiles und des Holzkohle-Bestandteiles ist die Anzünd-Dauer der erfindungsgemäßen Brennstoffes sehr kurz.

Das Handling des erfindungsgemäßen Brennstoffes ist überdies äußerst bequem und einfach, da der erfindungsgemäße Brennstoff das Aufbringen einer zusätzlichen Holzkohleschicht und eine Verteilung von einigen wenigen Glutnestern nicht mehr erfordert.

Zumal der erfindungsgemäße Brennstoff die Geduld des Grillbetreibers nicht strapaziert, wird die Wahrscheinlichkeit, dass der Grillbetreiber einen flüssigen, schwer kontrollierbaren Brandbeschleuniger zum verhängnisvollen Einsatz bringt, deutlich reduziert.

Ein besonderer Vorteil des erfindungsgemäßen Brennstoffes besteht ferner in dem Umstand , dass er nach der Initial-Anzündung innerhalb einer besonders kurzen Zeit ein gleichmäßiges Glutbett ohne Vornahme von weiteren Verfahrensschritten bildet.

Ein besonderer Vorteil des erfindungsgemäßen Brennstoffes ist darüber hinaus darin zu sehen, dass er die Gefahr eines stichflammenartigen Aufloderns selbst unmittelbar nach seiner primären Anzündung mittels Feuerzeug oder Streichholz nicht kennt.

Der erfindungsgemäße Brennstoff ist auch deswegen in besonderem Maße vorteilhaft, weil er nicht nur ein sicheres Anzünden der obersten Stücke einer Holzkohleschicht gestattet, sondern selbst tieferliegende und weiter unten in einer dickeren Holzkohleschicht befindliche Holzkohlestücke sicher einer Anzündung zuführt.

Dadurch wird die verstrichene, benötigte Anzünd-Zeitspanne bis zur gleichmäßigen Durchsetzung einer dickeren, für Grillzwecke geeigneten Holzkohleschicht mit Glut dramatisch verkürzt und die Geduld des Grill-Betreibers in besonderem Maße geschont.

Vorteilhaft ist im Falle des erfindungsgemäßen Brennstoffes ferner, dass er das bei flüssigen Grillanzündhilfen gefürchtete Problem einer Pfützenbildung auf dem Grillboden nicht kennt. Dieser Umstand wirkt sich vorteilhaft auf die körperliche Unversehrtheit des Grill-Betreibers und/oder auf den Geschmack des später auf den Rost aufgelegten Grillgutes aus.

Ein weiterer Vorteil des erfindungsgemäßen Brennstoffes ergibt sich daraus, dass er selbst bei undichtem Grill-Boden die - bei flüssigen Grillanzündhilfen gefürchtete - Gefahr einer Fleckenbildung auf dem Untergrund sicher ausschließt.

## Patentansprüche

1. Brennstoff zum Beheizen einer Einrichtung zum Grillen, der einen ersten Bestandteil, welcher Holzkohle enthält, und einen weiteren Holzkohle-Entzündungs-Bestandteil umfasst, welcher mehrere brennbare Stoffe, welche fest oder flüssig sind, enthält, wobei der weitere Holzkohle-Entzündungs-Bestandteil nach seiner Entflammung weiter brennt, auch wenn die Zündquelle entfernt wird und wobei der Holzkohle-Entzündungs-Bestandteil durch dieses Weiterbrennen den ersten Bestandteil aus Holzkohle entzündet,
**dadurch gekennzeichnet, dass**
der weitere und feste Holzkohle-Entzündungs-Bestandteil, welcher mehrere brennbare Stoffe enthält,
- einen Gewichtsanteil an dem Gesamtgewicht des Brennstoffs von 0,2 Gew.% bis 90 Gew.% aufweist,
- den Holzkohlebestandteil in Form einer teilweisen oder vollständigen Ummantelung, Umhüllung, Schale oder eines Balles umgibt, deren Wandstärke im Bereich von 0,5 mm bis 5,0 cm liegt,
- mit Luftsauerstoff unter Abgabe von Wärme verbrennbar ist, wobei die dabei abgegebene Wärme den Holzkohle-Bestandteil zumindest auf dessen Zündtemperatur aufheizt und dabei anzündet, und
- dass die Schichtdicke oder der Gehalt des Holzkohle-Entzündungs-Bestandteiles derart gewählt sind, dass nach einer Brenndauer des Holzkohle-Entzündungs-Bestandteiles von längstens 10 Minuten der Holzkohle-Entzündungs-Bestandteil vollständig abgebrannt ist.

2. Brennstoff nach Anspruch 1, **dadurch gekennzeichnet, dass** der erste Bestandteil aus Holzkohle in Form von Grill Holzkohle, Grillholzkohlebriketts, losen Stücken oder Pellets ausgebildet ist.

3. Brennstoff nach einem der vorhergehenden Ansprüche, **dadurch gekennzeichnet, dass** der weitere Holzkohle-Entzündungs-Bestandteil, welcher mehrere brennbare Stoffe enthält, einen Flammpunkt oberhalb von 55 °C, vorzugsweise oberhalb von 60 °C, insbesondere oberhalb von 65 °C, aufweist.

4. Brennstoff nach einem der vorhergehenden Ansprüche, **dadurch gekennzeichnet, dass** der weitere Holzkohle-Entzündungs-Bestandteil mehrere Stoffe enthält, welche ausgewählt sind aus der Gruppe, die Holz, Sägemehl, Sägespäne, Holzpellets, Holzkügelchen, Paraffine, dickflüssiges Paraffin, dünnflüssiges Paraffin, feste oder flüssige Gemische gereinigter, gesättigter aliphatischer Kohlenwasserstoffe, verzweigte Isoparaffine, unverzweigte n-Paraffine, Alkane, Paraffinkohlenwasserstoffe, Isoalkane, n-Alkane, Cycloalkane, Alkanole, Ethanol, Alkansulfonate, Alkylsulfonate, Hexamethylentetramin, Wasser, Glycerin, Rapsöl, Rüböl, Mineralöl, vollsynthetische Öle, Silikonöle, pflanzliche Öle, tierische Öle, Triglyceride mittlerer oder ungesättigter Fettsäuren, Leime, Klebstoffe, welche wasserlösliche, tierische, pflanzliche oder synthetische Polymere und Wasser als Lösungsmittel umfassen, Carbonsäuren, anorganische Sauerstoffsäuren, Säureanhydride, Zellulose, Polysaccharide, Erdöl, Petroleum, Rohöl, Erdöl-Destillate, Naphthensäuren, Phenole, Harze, Naphthene, Aromaten, oder Mischungen hiervon, umfasst.

5. Brennstoff nach einem der vorhergehenden Ansprüche, **dadurch gekennzeichnet, dass** der Holzkohle-Entzündungs-Bestandteil, welcher mehrere brennbare Stoffe enthält, mit dem Holzkohlebestandteil mittels Beflockung und/oder Aufspritzen und/oder Eintauchen und/oder Verpressen und/oder Verkleben in Kontakt bringbar ist.

6. Brennstoff nach einem der vorhergehenden Ansprüche, **dadurch gekennzeichnet, dass** die Wandstärke des in Form einer teilweisen oder vollständigen Ummantelung, Umhüllung, Schale oder Kugel ausgebildeten Holzkohle-Entzündungs-Bestandteiles, , vorzugsweise im Bereich von 1,0 mm bis 4,0 cm, insbesondere im Bereich von 2,0 mm bis 3,0 cm liegt.

7. Brennstoff nach einem der vorhergehenden Ansprüche, **dadurch gekennzeichnet, dass** die Schichtdicke oder der Gehalt des Holzkohle-Entzündungs-Bestandteiles derart gewählt sind, dass nach einer Brenndauer des Holzkohle-Entzündungs-Bestandteiles von vorzugsweise längstens 9 Minuten, insbesondere von längstens 8 Minuten, der Holzkohle-Entzündungs-Bestandteil vollständig abgebrannt ist.

## Claims

1. A fuel for heating an appliance for grilling, which fuel comprises a first component containing charcoal, and a further charcoal ignition component containing some combustible substances, comprising some burnable components, which are solid or fluid, wherein the further charcoal ignition component continue to burn after their ignition, even when the source of ignition is removed, and wherein the charcoal ignition component, by this continued combustion, ignite the first component made of charcoal,
**characterised in that**
the further and solid charcoal ignition component containing some combustible substances,
- comprises the percentage by weight of the charcoal ignition component in the total weight of the fuel is within a range of 0,2 wt-% to 90 wt-%,
- enclose the charcoal component in the form of a partial or complete coating, sheathing, shell or a ball, **in that** the wall thickness is within a range of 0,5 mm to 5,0 cm,
- are combustible with atmospheric oxygen while emitting heat, the heat emitted heating the charcoal component at least to its ignition temperature and thereby igniting it and
- the layer thickness or the amount of the charcoal ignition components are selected such that after a burning period of the charcoal ignition component of 10 minutes at the longest, the charcoal ignition component has burned off completely.

2. The fuel of claim 1, **characterised in that** the first component is made of charcoal in the form of grill charcoal, grill charcoal briquettes, loose pieces or pellets.

3. The fuel of any one of the preceding claims, **characterised in that** the further charcoal ignition component containing one or more combustible substances having a flash point above 55°C, preferably above 60°C, especially above 65°C.

4. The fuel of any one of the preceding claims, **characterised in that** the further charcoal ignition component contain some substances selected from the group comprising wood, sawdust, wood shavings, wood pellets, spherical pieces of wood, paraffins, viscous paraffins, highly fluid paraffins, solid or fluid mixtures of cleaned saturated aliphatic hydrocarbon, branched isoparaffins, unbranched n-paraffins, alkane, paraffin hydrocarbons, isoalkane, n-alkane, cycloalkane, alkanole, ethanol, alkane sulfonates, alkyl sulfonates, hexamethylentetramin, water, glycerin, rape oil, beet oil, mineral oil, fully synthetic oil, silicone oil, veg-oil, animal oil, triglycerides, intermediate or unsaturated fatty acids, glues, adhesives comprising water soluble, animal, vegetable or synthetic polymers and water as a solvent, carbon acid, inorganic oxygen acid, acidanhydrid, cellulose, polysaccharides, crude oil, petroleum, raw oil, crude oil distillates, naphthenic acid, phenols, resins, naphthene, aromates or mixtures thereof.

5. The fuel of any one of the preceding claims, **characterised in that** the charcoal ignition component containing one or more combustible substances may be brought into contact with the charcoal component by flocking and/or spraying and/or immersing and/or pressing and/or gluing.

6. The fuel of any preceding claim, **characterised in that** the wall thickness of the charcoal ignition component made in the form of a partial or complete coating, sheathing, shell or sphere is preferably within a range of 1,0 mm to 4,0 cm, especially within in the range of 2,0 mm to 3,0 cm.

7. The fuel of any one of the preceding claims, **characterised in that** the layer thickness or the amount of the charcoal ignition component are selected such that after a burning period of the charcoal ignition component of preferably 9 minutes at the longest, especially 8 minutes at the longest, the charcoal ignition component has burned off completely.

## Revendications

1. Combustible destiné à chauffer un dispositif de grilloir, qui comprend un premier composant qui contient du charbon de bois et un autre composant d'inflammation en charbon de bois, qui contient plusieurs substances combustibles qui sont solides ou liquides, l'autre composant d'inflammation en charbon de bois continuant à brûler après son inflammation, même lorsque la source d'inflammation est retirée et le composant d'inflammation en charbon de bois enflammant le premier composant en charbon de bois par la poursuite de cette combustion,
**caractérisé en ce que**
l'autre composant solide d'inflammation en charbon de bois qui contient plusieurs substances inflammables,
- présente une proportion de poids sur le poids total du combustible de 0,2 % du poids à 90 % du poids,
- entoure le composant en charbon de bois sous la forme d'un enrobage, d'une enveloppe, d'une coquille ou d'une balle partielle ou complète, dont l'épaisseur de paroi se situe dans la zone de 0,5 mm à 5,0 cm.
- est combustible à l'oxygène atmosphérique avec dégagement de chaleur, la chaleur alors dégagée réchauffant le composant en charbon de bois au moins à sa température d'inflammation et l'enflammant alors, et
- **en ce que** l'épaisseur de couche ou la qualité du composant d'inflammation en charbon de bois sont sélectionnées de sorte qu'après une durée de combustion du composant d'inflammation en charbon de bois de plus de 10 minutes, le composant d'inflammation en charbon de bois est entièrement consumé.

2. Combustible selon la revendication 1, **caractérisé en ce que** le premier composant en charbon de bois est constitué sous la forme de charbon de bois pour grilloir, de briquettes de charbon de bois pour grilloir, de morceaux en vrac ou de boulettes.

3. Combustible selon une quelconque des revendications précédentes, **caractérisé en ce que** l'autre composant d'inflammation en charbon de bois, qui contient plusieurs substances combustibles, présente un point d'inflammation au-dessus de 55 °C, de préférence au-dessus de 60 °C, notamment au-dessus de 65 °C.

4. Combustible selon une quelconque des revendications précédentes, **caractérisé en ce que** l'autre composant d'inflammation en charbon de bois contient plusieurs substances, qui sont sélectionnées à partir du groupe qui comprend du bois, de la sciure de bois, des copeaux de bois, des pellets en bois, des globules en bois, de la paraffine, de la paraffine visqueuse, de la paraffine fluide, des mélanges solides ou liquides d'hydrocarbures aliphatiques saturés purifiés, des isoparaffines ramifiées, des n-paraffines non ramifiées, des alcanes, des hydrocarbures aliphatiques saturés, des isoalcanes, des n-alcanes, des cycloalcanes, des alcanols, de l'éthanol, des sulfonates d'alcane, des sulfonates d'alkyle, de l'hexaméthylène-tétramine, de l'eau, de la glycérine, de l'huile de colza, de l'huile de navette, de l'huile minérale, des huiles entièrement synthétiques, des huiles de silicones, des huiles végétales, des huiles animales, des triglycérides d'acides gras moyens ou non saturés, des colles, des adhésifs, qui comprennent des polymères solubles dans l'eau, animaux, végétaux ou synthétiques et de l'eau comme agent de dissolution, des acides carbonés, des oxyacides anorganiques, des anhydrides d'acide, de la cellulose, des polysaccharides, du pétrole, du pétrole lampant, du pétrole brut, des distillats de pétrole, des acides naphténiques, des phénols, des matières résineuses, des cyclohexanes, des aromatiques ou des mélanges de ceux-ci.

5. Combustible selon une quelconque des revendications précédentes, **caractérisé en ce que** le composant d'inflammation en charbon de bois, qui contient plusieurs substances combustibles, peut être mis en contact avec le composant en charbon de bois par flocage et/ou par application au pistolet et/ou par trempe et/ou par pressage et/ou par collage.

6. Combustible selon une quelconque des revendications précédentes, **caractérisé en ce que** l'épaisseur de paroi du composant d'inflammation en charbon de bois sous la forme d'un enrobage, d'une enveloppe, d'une coquille ou d'une balle partielle ou complète, se situe de préférence dans la zone de 1,0 mm à 4,0 cm, notamment dans la zone de 2,0 mm à 3,0 cm.

7. Combustible selon une quelconque des revendications précédentes, **caractérisé en ce que** l'épaisseur de couche ou la qualité du composant d'inflammation en charbon de bois sont sélectionnées de sorte qu'après une durée de combustion du composant d'inflammation en charbon de bois de préférence maximale de 9 minutes, notamment maximale de 8 minutes, le composant d'inflammation en charbon de bois est entièrement consumé.
